# EUROPEAN PATENT APPLICATION

(11) **EP 2 308 748 A2**
(43) Date of publication of application: **13.04.2011**
(21) Application number: 09805164.2
(22) Date of filing: 03.08.2009
(51) Int. Cl.: B62K 21/12

(54) **HANDLE FRAME ROTATING APPARATUS FOR BICYCLE**

(30) Priority: 05.08.2008 KR 20080076601
(71) Applicant: Kim, Ja Kyung, Gyeonggi-do 431-800 (KR)
(72) Inventor: Kim, Ja Kyung, Gyeonggi-do 431-800 (KR)
(74) Representative: Brand, Thomas Louis
(86) International application number: PCT/KR2009/004330
(87) International publication number: WO 2010/016703

(57) **Abstract**

Disclosed is an apparatus for rotating a handle frame of a bicycle. In order to facilitate the manipulation of a brake lever or a gear shift lever and further improve the convenience of the product, the apparatus for rotating the handle frame is mounted on the handle frame of the vehicle to allow the handle frame to rotate in a rotation direction identical to that of a handle and at a rotation angle identical to that of the handle, so that the handle frame rotates according to road conditions. A rider is protected from impact occurring according to the road conditions.

## Description

### BACKGROUND OF THE INVENTION

### 1. Field of the Invention

The present invention relates to an apparatus for rotating a handle frame of a bicycle. More particularly, the present invention relates to an apparatus for rotating a handle frame of a bicycle, capable of easily manipulating a brake and changing the speed of the bicycle by rotating the handle frame according to riding conditions.

### 2. Description of the Related Art

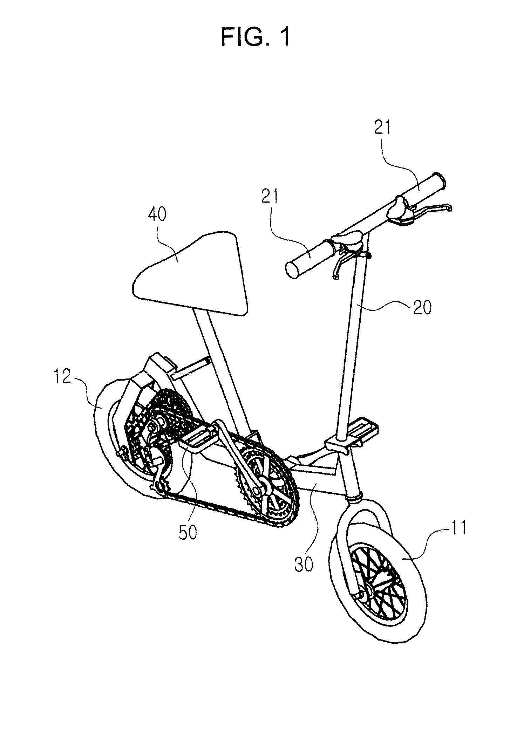

In general, as shown in FIG. 1, a bicycle includes front and rear wheels 11 and 12 for running, a handle frame 20 linked with the front wheel 11 to adjust the forwarding direction of the front wheel 11, and a body frame 30 to support all of the handle frame 20, the rear wheel 12, a seat 40, and a pedal 50. Accordingly, when a rider seated on the saddle 40 rotates the pedal 50, power is transmitted to the rear wheel 12, so that the bicycle runs forward. In addition, when the rider turns handles 21 of the handle frame 20, the direction of the front wheel 11 is changed.

Meanwhile, various kinds of bicycles have been designed by taking into consideration riders' riding postures. In addition to the most popular bicycles, stunt bicycles, racing bicycles, such as those ridden in velodromes, and those used for racing on the road, and mountain terrain bicycles (M.T.B) may be representatively listed.

A brake device is provided on the handle 21 of the bicycle and includes a brake, a wire, and a brake lever. The brake device of the bicycle may be applied only when the rider presses a brake lever by using fingers in a state in which the rider grips the handle 21.

In particular, when a rider rides on the mountain terrain bicycle, the stunt bicycle, or a motorcycle and grips the handles 21 of the handle frame 20 extending linearly, the elbow of the rider is bent outward, and the waist of the rider is bowed in half. A posture in which the rider bows the waist approximately in half is the best posture to prevent impact.

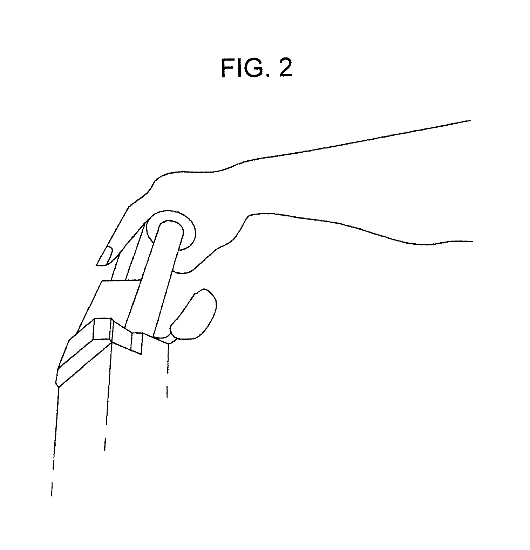

However, when the rider climbs up or down a mountain on a bicycle, the rider may have various postures according to the conditions of the road which are different to the posture in which the rider bows the waist approximately in half. Accordingly, the rider rides in a state in which the wrist may be seriously bent as shown in FIG. 2, so that impact may be applied to the wrist of the rider. If the rider presses the lever of the brake device or a gear shift lever by using fingers in this inconvenient posture, the rider may feel discomfort.

Therefore, an additional device, in which the handle frame is rotated upward or downward according to the conditions of the riding road, has been required.

### SUMMARY OF THE INVENTION

An object of the present invention is to provide an apparatus for rotating a handle frame of a bicycle, in which the apparatus for rotating the handle frame is mounted on the handle frame of a vehicle to allow the handle frame to rotate in a rotation direction identical to that of a handle and at a rotation angle identical to that of the handle, so that the handle frame rotates according to a road state, thereby facilitating the manipulation of a brake lever or a gear shift lever and further improving convenience of the product.

In order to accomplish the object of the present invention, there is provided an apparatus for rotating a handle frame of a bicycle. The apparatus is installed at a central portion of the handle frame such that the handle frame rotatably moves upward or downward as handles installed at both sides of the handle frame rotate. The includes a handle frame fixing member to fix the handle frame thereto, and a rotating member installed at a central portion of the handle frame fixing member to rotate the handle frame fixing member.

The handle frame fixing member comprises Two fixing housing, a through hole for engaging two fixing housings, a fixing unit for inserting the handle frame into the through hole and then coupling both sides of the fixing housing, and a protrusion part installed at one side of the fixing housing to guide the handle frame fixing member according to the rotation of the rotating member.

The rotating member includes a rotating housing installed at an outer central portion of a fixing housing of the handle frame fixing member, and a guide groove engaged with a protrusion of the handle frame fixing member to guide the handle frame fixing member in a direction determined according to intention of a rider and at an angle determined according to the intention of the rider. The guide groove restricts a movement angle of the handle frame fixing member within a predetermined angle range.

The apparatus further includes an elastic member fixedly installed at an inside of the rotating housing of the rotating member and an outer side of the fixing housing of the handle frame fixing member to return the handle frame fixing member to an original state thereof.

The apparatus further includes a stopper engaged with the handle frame fixing member and the rotating member at predetermined positions of the rotating housing and the fixing housing such that the rotating member is fixed to the handle frame fixing member.

As described above, the apparatus for rotating the handle frame is mounted on the handle frame of a vehicle to allow the handle frame to rotate in a rotation direction identical to that of a handle and at a rotation angle identical to that of the handle, so that the handle frame rotates according to a road state, thereby facilitating the manipulation of a brake lever or a gear shift lever and more improving the convenience for a product. In addition, a rider can be protected from impact occurring according to the road conditions.

### BRIEF DESCRIPTION OF THE DRAWINGS

FIG. 1 is a view showing the structure of a typical bicycle;
FIG. 2 is a view showing the position of a wrist of a rider of the bicycle of FIG. 1;
FIG. 3 is a view showing a handle frame fixing member mounted on a bicycle according to the present invention;
FIG. 4 is a view showing a rotating member installed in the handle frame fixing member of FIG. 3;
FIG. 5 is a view showing the structure of the rotating member of FIG. 4 in detail;
FIG. 6 is an exploded perspective view showing the rotating member and the handle frame fixing member according to the present invention;
FIG. 7 is a view showing the operating state of the rotating member when the handle frame according to the present invention moves upward; and
FIG. 8 is a view showing the operating state of the rotating member when the handle frame according to the present invention moves downward.

### DETAILED DESCRIPTION OF THE INVENTION

Hereinafter, exemplary embodiments of the present invention will be described with reference to accompanying drawings. A bicycle will be described as an example according to one embodiment of the present invention, but the present invention is applicable to two-wheeled vehicles such as an auto-bicycle.

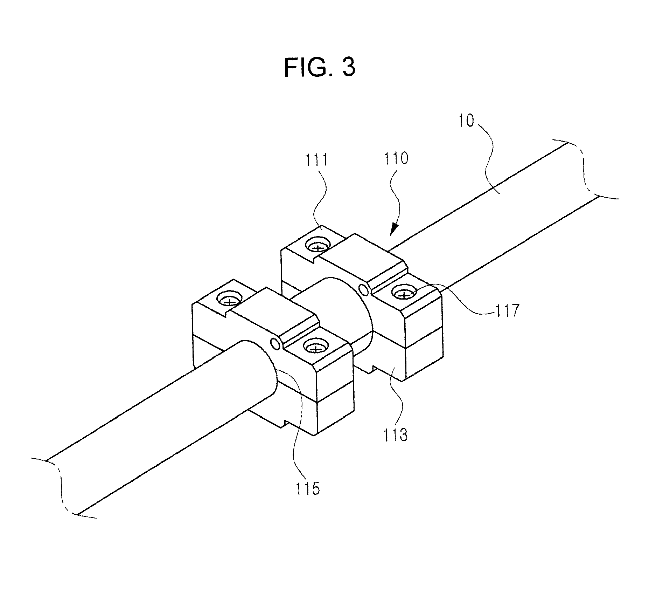

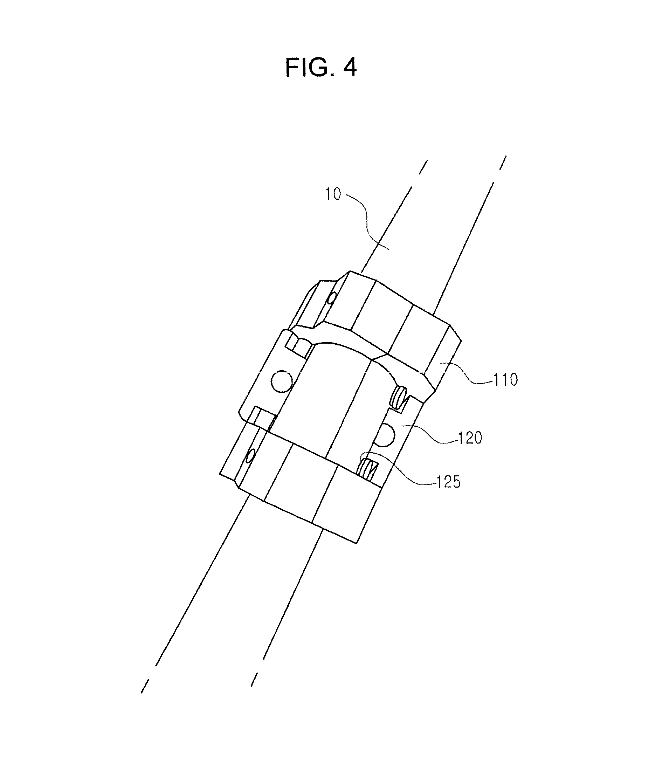

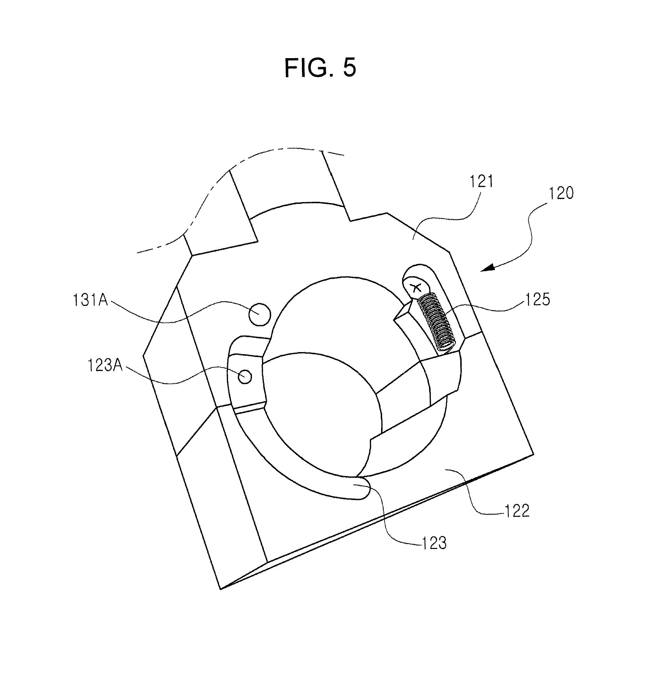

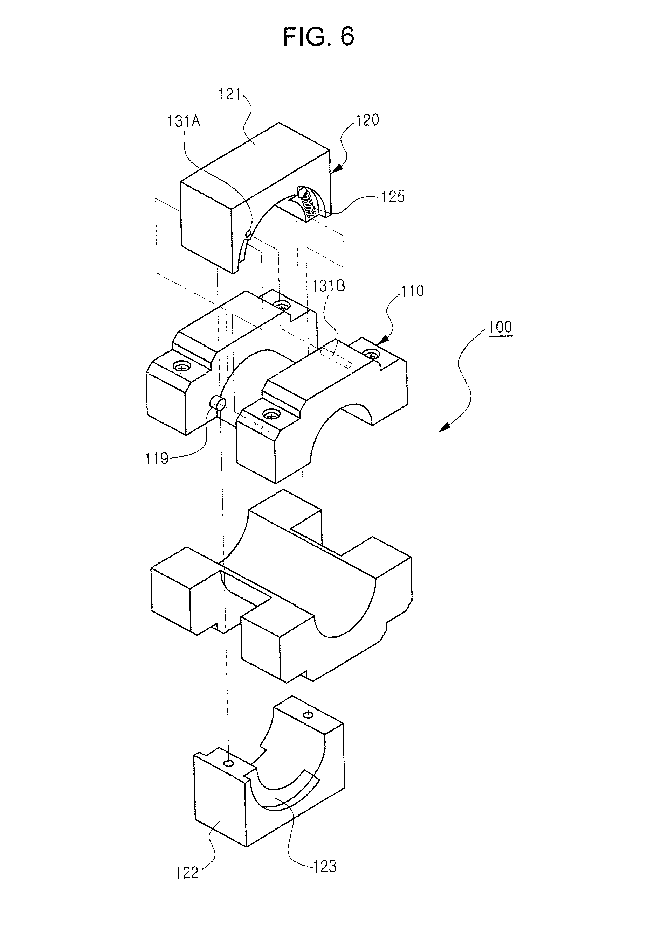

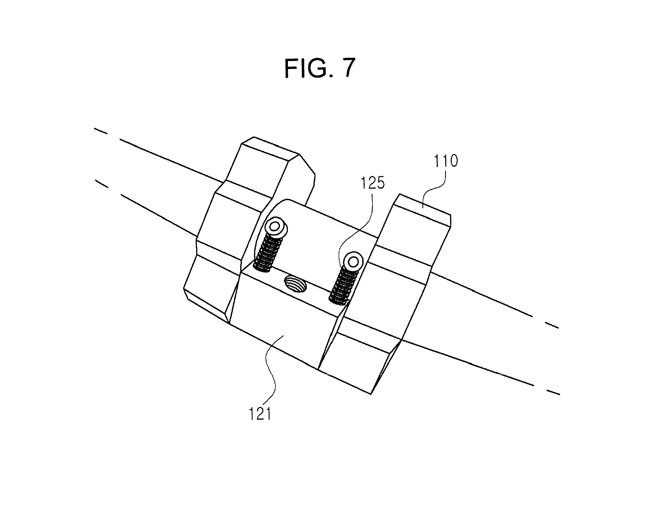

FIG. 3 is a view showing an apparatus 100 for rotating a handle frame 10 mounted on a bicycle according to the present invention, and FIG. 4 is a view showing a rotating member 120 of FIG. 3 fixedly mounted on a handle frame 10. FIG. 5 is a perspective view showing the structure of the rotating member of FIG. 3, and FIG. 6 is an exploded perspective view showing the rotating member 120 of FIG. 3 and a handle frame fixing member 110. FIG. 7 is a perspective view showing the rotating member 120 of FIG. 3 mounted on the handle frame fixing member 110.

In other words, as shown in FIG. 3, the apparatus 100 for rotating a handle frame 10 includes the handle frame fixing member 110 to fix the handle frame 10 thereto and a rotating member to rotate the handle frame fixing member 110.

The handle frame fixing member 110 is configured in such a manner that a through hole 115 is formed by engaging two fixing housings 111 and 113 with each other, the handle frame 10 is inserted into the through hole 115, and then both sides of the fixing housing 111 and 113 are coupled with by using a bolt 117 to fix the handle frame 10.

The handle frame fixing member 110 includes a protrusion part 119 installed at one side of the fixing housing 111 to guide the handle frame fixing member 110 according to the rotation of the rotating member 120.

As shown in FIG. 4, the rotating member 120 is provided at an outer central portion of the handle frame fixing member 110 to rotate the handle frame fixing member 110 in a direction determined according to the intention of a rider and at an angle determined according to the intention of the rider. In other words, the rotating member 120 is coupled with an outer portion of the housing 111 of the handle frame fixing member 110 by using a bolt.

As shown in FIG. 5, the rotating member 120 includes rotating housings 121 and 122 installed at the outer portion of the fixing housing 111 of the handle frame fixing member 110 and a guide groove 123 engaged with the protrusion 119 of the handle frame fixing member 110 to guide the protrusion 119 such that the handle frame fixing member 110 is moved in the direction determined according to the intention of the rider or at the direction determined according to the intention of the rider. The guide groove 123 includes a fixture member 123A to prevent the handle frame 10 from moving at a predetermined angle or more.

The apparatus for rotating the handle frame 10 further includes a stopper engaged with the handle frame fixing member 110 and the rotating member 120 at a predetermined position such that the handle frame fixing member 110 can be fixed to the rotating member 120.

If the handle of the handle frame 10 is rotated upward due to a driving force corresponding to the extent that a fixing ball 131B of the stopper is separated from a fixing groove 131A, the protrusion 119 moves along the guide groove 123 provided at the outer portion of the rotating housing 121 of the rotating member 120. In this case, the rotation angle is restricted by the fixture member 123A of the guide groove 123. As the rotating member 120 rotates upward, the handle frame fixing member 110 rotates upward.

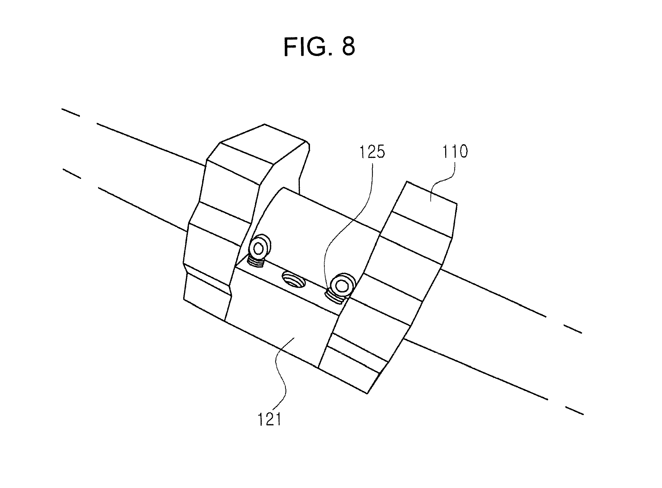

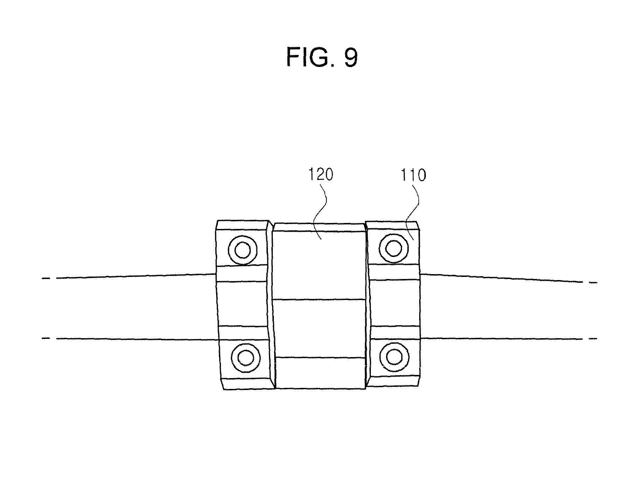

As shown in FIGS. 8 and 9, the housing 121 of the rotating member 120 is provided therein with an elastic member 125 to return the handle frame 10 moved along the guide groove 123 to the original position thereof. The elastic member 125 has one side coupled with the housing 111 of the handle frame fixing member 110 by using a screw, and has an opposite side fixed to the housing 121 of the rotating member 120. Therefore, if the handle frame 10 is rotated upward according to the intention of the rider, the elasticity force of the elastic member 125 is generated as shown in FIG. 8.

However, if the handle frame 10 is rotated downward according to the intention of the rider, the handle frame fixing member 110 returns to the original position thereof according to the elasticity force of the elastic member 125 as shown in FIG. 9.

In other words, if the handle 21 of the handle frame 10 is rotated upward according to the intention of the rider when the rider pedals the bicycle along an inclined mountain road, the handle frame fixing member 110 is moved along the guide groove 123 of the rotating member 120.

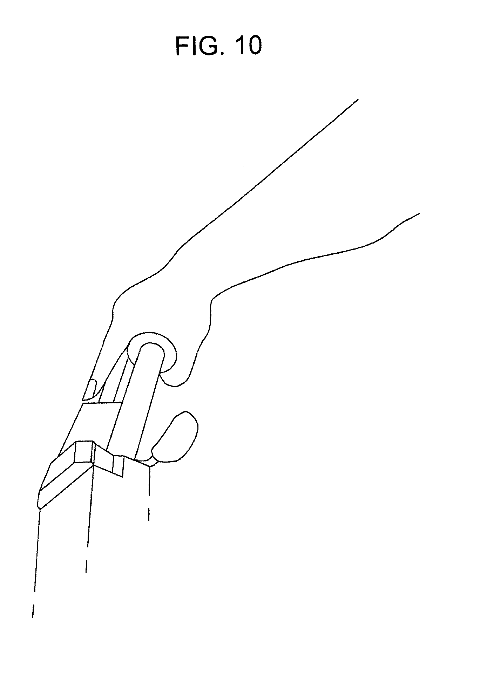

Therefore, the handle frame 10 is moved upward, so that the wrist of the rider is positioned as if the rider is pedaling the bicycle on a flat area as shown in FIG. 10. Accordingly, the rider can easily manipulate a gear shift lever or a brake lever by using fingers, and impact applied to the wrist of the rider can be reduced, so that rider fatigue can be reduced.

Meanwhile, if the handle 21 of the handle frame 10 is rotated downward according to the intention of the rider, the handle frame fixing member 110 returns to the original position thereof by the elasticity force of the elastic member 125.

As described above, the apparatus 100 for rotating the handle frame 10 of the bicycle according to the present invention is fixedly installed at the central portion of the handle frame 10 to rotate in the direction identical to the rotation direction of the handle of the handle frame and at the angle identical to the rotation angle of the handle of the handle frame, so that the handle frame is rotated according to the road conditions. Accordingly, the rider can easily manipulate the brake lever or the gear shift lever.

Although the exemplary embodiments of the present invention have been described, it is understood that the present invention should not be limited to these exemplary embodiments but various changes and modifications can be made by one ordinary skilled in the art within the spirit and scope of the present invention as hereinafter claimed.

The handle frame is rotated according to road states, so that the brake lever or the shift lever can be easily manipulated, and the convenience of the product can further improved. To this end, the apparatus for rotating the handle frame is mounted on the handle frame of a vehicle to rotate in the direction identical to the rotation direction of the handle of the handle frame and at the angle identical to the rotation angle of the handle of the handle frame. Accordingly, the apparatus for rotating the handle frame not only has sufficient sale or business possibilities, but can be actually realized. Therefore, the apparatus for rotating the handle frame has industrial applicability.

## Claims

1. An apparatus for rotating a handle frame of a bicycle, the apparatus comprising:
A handle frame;
A handle frame rotating unit installed at a central portion of the handle frame such that the handle frame rotatably moves upward or downward as handles installed at both sides of the handle frame rotate.

2. An apparatus of claim 1, wherein the handle frame rotating unit comprises:
a handle frame fixing member to fix the handle frame thereto; and
a rotating member installed at a central portion of the handle frame fixing member to rotate the handle frame fixing member,

3. An apparatus of claim 1, wherein the handle frame fixing member comprises:
Two fixing housing;
A through hole for engaging two fixing housings
A fixing unit for inserting the handle frame into the through hole and then coupling both sides of the fixing housing; and
a protrusion part installed at one side of the fixing housing to guide the handle frame fixing member according to the rotation of the rotating member.

4. An apparatus of claim 3, wherein the rotating member includes:
a rotating housing installed at an outer central portion of a fixing housing of the handle frame fixing member; and
a guide groove engaged with a protrusion of the handle frame fixing member to guide the handle frame fixing member in a direction determined according to intention of a rider and at an angle determined according to the intention of the rider, and
wherein the guide groove restricts a movement angle of the handle frame fixing member within a predetermined angle range.

5. The apparatus of claim 4, further comprising an elastic member fixedly installed at an inside of the rotating housing of the rotating member and an outer side of the fixing housing of the handle frame fixing member to return the handle frame fixing member to an original state thereof.

6. The apparatus of claim 2, further comprising a stopper engaged with the handle frame fixing member and the rotating member at predetermined positions of the rotating housing and the fixing hosing such that the rotating member is fixed to the handle frame fixing member.
